# NEUE EUROPÄISCHE PATENTSCHRIFT

(11) **EP 1 641 584 B2**
(45) Veröffentlichungstag und Bekanntmachung des Hinweises auf die Entscheidung über den Einspruch: **07.03.2012**
(45) Hinweis auf die Patenterteilung: 27.08.2008
(21) Anmeldenummer: 04738856.6
(22) Anmeldetag: 03.07.2004
(51) Int. Cl.: B23C 3/18, G05B 19/00

(54) **FRÄSVERFAHREN ZUR FERTIGUNG VON BAUTEILEN**
MILLING METHOD FOR THE PRODUCTION OF COMPONENTS
PROCEDE DE FRAISAGE POUR LA FABRICATION DE PIECES

(30) Priorität: 08.07.2003 DE 10330831
(43) Veröffentlichungstag der Anmeldung: 05.04.2006
(73) Patentinhaber: MTU Aero Engines GmbH, 80995 München (DE)
(72) Erfinder: GLÄSSER, Arndt, 85221 Dachau (DE)
(86) Internationale Anmeldenummer: PCT/DE2004/001426
(87) Internationale Veröffentlichungsnummer: WO 2005/005083

(56) Entgegenhaltungen:
- EP-A- 1 146 408
- WO-A-93/23820
- DE-A1- 10 044 306
- DE-A1- 10 114 811
- GB-A- 2 192 075
- US-A- 5 107 436
- US-A- 5 122 966
- US-A- 5 563 484
- US-A- 5 825 017
- US-B1- 6 311 100

## Beschreibung

Die Erfindung betrifft ein Fräsverfahren zur Fertigung von Bauteilen nach dem Oberbegriff des Patentanspruchs 1.

Die hier vorliegende Erfindung betrifft das Gebiet der Frästechnik, insbesondere das HSC-Fräsen (High Speed Cutting Fräsen), welches auch als HPC-Fräsen (High Performance Cutting Fräsen) bezeichnet wird.

Beim Fräsen eines Werkstücks zur Fertigung eines Bauteils ist es von entscheidender Bedeutung, dass der Fräser bzw. das Fräswerkzeug beim Fräsen die Geometrie bzw. Freiformfläche des zu fräsenden Bauteils nicht verletzt. Handelt es sich bei dem zu fräsenden Bauteil zum Beispiel um einen Rotor mit integraler Beschaufelung, wobei bei einem solchen Rotor mithilfe des Fräsverfahrens Strömungskanäle zwischen benachbarten Schaufeln herauszufräsen sind, so darf der Fräser bzw. das Fräswerkzeug beim Herausfräsen eines Strömungskanals die den Strömungskanal begrenzenden Schaufeln bzw. die korrespondierenden Schaufeloberflächen derselben nicht verletzen. Es muss demnach eine Kollision des Fräsers mit den Schaufeln bzw. Schaufeloberflächen sicher vermieden werden. Dies ist insbesondere dann von Bedeutung, wenn die Werkzeugbahnen bzw. die Werkzeugvektoren unter Verwendung von Vorlaufwinkeln und Anstellwinkeln definiert werden.

So offenbart EP-A-1 146 408 ein Fräsverfahren zur Fertigung von Bauteilen unter Erzeugung von Vertiefungen mit mindestens einer Seitenwand, wobei ein Fräswerkzeug entlang einer definierten Werkzeugbahn bewegt wird. Zu jeder Werkzeugbahn wird dabei eine Führungsbahn definiert; dabei gilt die Werkzeugbahn für die Werkzeugspitze und die Führungsbahn für einen hiervon verschiedenen Punkt des Werkzeugs.

Hiervon ausgehend liegt der vorliegenden Erfindung das Problem zu Grunde, ein neuartiges Fräsverfahren zur Fertigung von Bauteilen vorzuschlagen.

Dieses Problem wird dadurch gelöst, dass das eingangs genannte Fräsverfahren durch die Merkmale des kennzeichnenden Teils des Patentanspruchs 1 weitergebildet ist.

Erfindungsgemäß wird zusätzlich zu der oder jeder Werkzeugbahn mindestens eine, den Oberflächen oder Kanten der mindestens einen Seitenwand entsprechenden, Kollisionskontur definiert und die Lage bzw. Ausrichtung des Fräswerkzeug relativ zu der oder jeder Kollisionskontur überwacht, wobei die Lage bzw. Ausrichtung des Fräswerkzeug verändert wird und/oder eine Fehlermeldung generiert wird, wenn zumindest eine der Kollisionskonturen vom Fräswerkzeug verletzt wird und wobei sich die oder jede Kollisionskontur auf das zu fertigende Bauteil bezieht. Mit der hier vorliegenden Erfindung wird ein besonders effektives Verfahren vorgeschlagen, um eine Kollision des Fräsers mit Oberflächen des zu fertigenden Bauteils sicher zu vermeiden.

Nach einer vorteilhaften Ausgestaltung der Erfindung werden zum Fräsen von Vertiefungen, die durch zwei Seitenwände begrenzt werden, zwei Kollisionskonturen definiert, wobei eine erste Kollisionskontur einer ersten Seitenwand und eine zweite Kollisionskontur einer zweiten Seitenwand entspricht. In dem Fall, in welchem das Fräswerkzeug die Kollisionskontur verletzt, die der aktuell zu fräsenden, ersten Seitenwand entspricht, wird die Lage bzw. Ausrichtung des Fräswerkzeug derart verändert, dass die Verletzung der Kollisionskontur beseitigt wird. In dem Fall, in welchem das Fräswerkzeug die Kollisionskontur verletzt, die der zweiten Seitenwand entspricht, welche der aktuell zu fräsenden ersten Seitenwand gegenüberliegt, wird ein Fehlerprotokoll und/oder eine Fehlermeldung erzeugt.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: einen stark schematisierten Querschnitt durch einen Rotor mit integraler Beschaufelung und mit einem Fräser in zwei unterschiedlichen Positionen zur Verdeutlichung des erfindungsgemäßen Verfahrens; und
- Fig. 2:: einen stark schematisierten Querschnitt durch einen Rotor mit integraler Beschaufelung und mit einem Fräser in zwei weiteren unterschiedlichen Positionen.

Nachfolgend wird die hier vorliegende Erfindung unter Bezugnahme auf die Figuren in größerem Detail erläutert. Bevor jedoch die Details des erfindungsgemäßen Verfahrens dargestellt werden, sollen nachfolgend einige Begriffe definiert werden, auf die später Bezug genommen wird.

Die Fräsbearbeitung des zu bearbeitenden Werkstücks bzw, Werkstoffs erfolgt mithilfe eines Werkzeugs, einem sogenannten Fräser. Beim Fräsen steht der Fräser im Eingriff mit dem Werkstoff. Zur Bearbeitung des Werkstücks wird das Werkzeug bzw. der Fräser relativ zum Werkstück bzw. Werkstoff bewegt. Die Bewegung des Werkzeugs bzw. Fräsers relativ zum Werkstück wird durch sogenannte Werkzeugkoordinaten beschrieben, wobei die Werkzeugkoordinaten die Position eines Werkzeugbezugspunkt definieren. Die Bewegung des Werkzeugbezugspunkts bei der Fräsbearbeitung des Werkstücks bezeichnet man als Werkzeugbahn bzw. Fräsbahn.

Ausgehend von einer Werkzeugspitze bzw. dem Werkzeugbezugspunkt erstreckt sich ein Vektor entlang einer Werkzeugachse bzw. eines Werkzeugschaftes des Werkzeugs bzw. Fräsers. Diesen Vektor entlang der Werkzeugachse ausgehend von der Werkzeugspitze in Richtung des Werkzeugschaftes bezeichnet man als Werkzeugvektor.

Die Fräsbearbeitung eines Werkstücks zur Ausbildung einer definierten dreidimensionalen Freiformfläche erfolgt mithilfe eines sogenannten 5-Achsfräsens. Beim 5-Achsfräsen kann das Werkzeug in fünf Achsen relativ zum zu bearbeitenden Werkstück bewegt werden. Drei Achsen dienen der linearen Relativbewegung des Werkzeugs relativ zum Werkstück, so dass jeder Punkt im Raum angefahren werden kann. Zusätzlich zu dieser linearen Bewegung entlang der sogenannten Linearachsen ist das Werkzeug zur Realisierung von Hinterschneidungen auch um eine Schwenkachse sowie eine Kippachse bewegbar. Entlang der Schwenkachse sowie der Kippachse werden rotatorische Bewegungen des Werkzeugs ermöglicht. Hierdurch ist es möglich, dass alle Punkte im Raum ohne Kollision angefahren werden können. Die Schwenkachse sowie die Kippachse werden häufig auch allgemein mit Rundachsen bezeichnet.

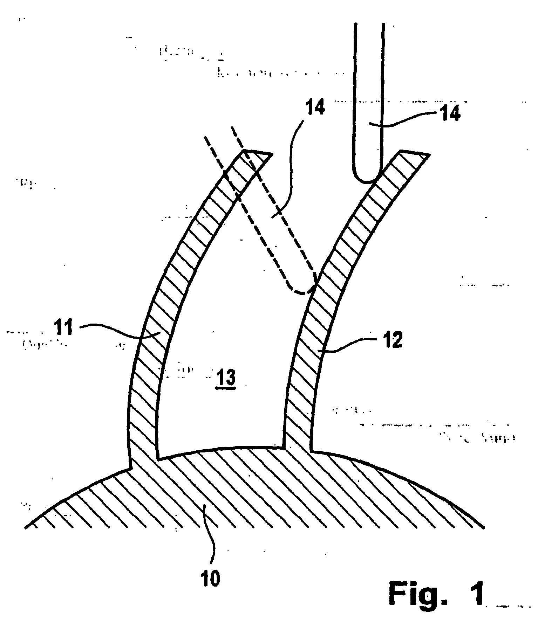

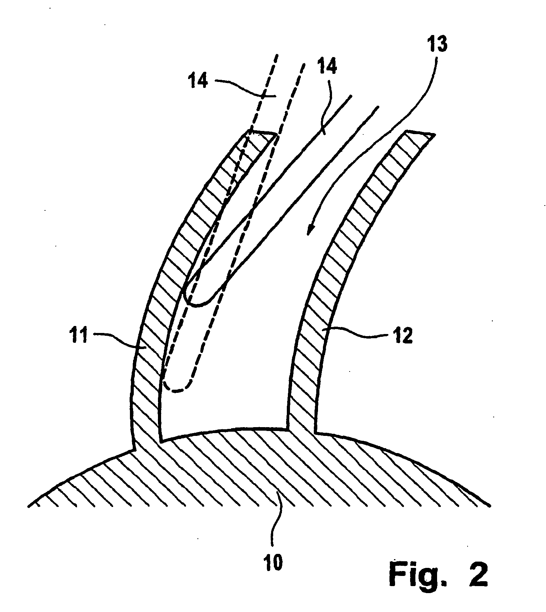

Nachfolgend wird die Erfindung unter Bezugnahme auf Fig. 1 und 2 in größerem Detail erläutert. Fig. 1 und 2 zeigen stark schematisiert einen Rotor 10 mit integraler Beschaufelung, wobei in Fig. 1 und 2 jeweils zwei Rotorschaufeln 11, 12 gezeigt sind. Zwischen den Rotorschaufeln 11, 12 wird ein Strömungskanal 13 eingeschlossen. Das erfindungsgemäße Fräsverfahren dient nun der Fertigung eines solchen Rotors 10, wobei mithilfe eines Fräswerkzeugs bzw. Fräsers der Strömungskanal 13 derart herauszufräsen ist, dass sich die gewünschte Kontur der Rotorschaufeln 11, 12 ergibt. Es sei nochmals daraufhingewiesen, dass die Darstellung in Fig. 1 und 2 stark schematisiert ist. Die Form und Abmessung der Rotorschaufeln 11, 12 sowie die Form und Abmessung des von den Rotorschaufeln 11, 12 begrenzten Strömungskanals 13 wurde ausschließlich aus Gründen einer einfachen Darstellung gewählt und ist für das Prinzip der hier vorliegenden Erfindung von untergeordneter Bedeutung.

In Fig. 1 und 2 ist jeweils ein Fräswerkzeug 14 in zwei unterschiedlichen Positionen gezeigt. Eine erste Position des Fräswerkzeugs 14 ist jeweils in durchgezogenen Linien ausgeführt und entspricht einer Lage bzw. Ausrichtung des Fräswerkzeugs 14, in welcher das Fräswerkzeug 14 die Kontur der Rotorschaufeln 11 und 12 nicht verletzt. In dieser Lage bzw. Ausrichtung des Fräswerkzeugs liegt demnach keine Kollision mit dem zu fertigenden Bauteil bzw. Rotor 10 vor. In einer zweiten Lage bzw. Ausrichtung des Fräswerkzeugs 14, die in Fig. 1 und 2 mit gestrichelten Linien dargestellt ist, schneidet das Fräswerkzeug die Kontur der Rotorschaufeln 11 bzw. 12 und kollidiert demnach mit der zu fertigenden Bauteilgeometrie. Eine derartige Kollision muss vermieden werden.

Im Sinne des erfindungsgemäßen Verfahrens wird hierzu zusätzlich zu der oder jeder Werkzeugbahn, entlang derer das Fräswerkzeug 14 bei der Fräsbearbeitung bewegt wird, mindestens eine Kollisionskontur definiert. Diese entspricht den Oberflächen oder Kanten der zu fräsenden Seitenwand 11, 12. Die Lage bzw. Ausrichtung des Fräswerkzeugs 14 relativ zu der oder jeder Kollisionskontur wird überwacht. Die Lage bzw. Ausrichtung des Fräswerkzeugs 14 wird verändert, wenn zumindest eine der Kollisionskonturen vom Fräswerkzeug 14 verletzt wird. Dabei bezieht sich die Kollisionskontur auf den zu fertigenden Rotor 10. Weiterhin liegt es im Sinne der Erfindung, eine Fehlermeldung bzw. ein Fehlerprotokoll zu generieren, wenn zumindest eine der Kollisionskonturen verletzt wird. Das Erzeugen bzw. Generieren der Fehlermeldung bzw. des Fehlerprotokolls kann auch anstelle der Veränderung der Fräserlage durchgeführt werden.

Wie Fig. 1 und 2 entnommen werden kann, sind beim Fräsen des Strömungskanals 13 prinzipiell zwei Arten von Kollisionen des Fräswerkzeugs 14 mit den Rotorschaufeln 11, 12 denkbar. Bei der in Fig. 1 gezeigten Möglichkeit, wird mit dem Fräswerkzeug 14 die den Strömungskanal 13 auf der rechten Seite begrenzende Rotorschaufel 12 herausgefräst. Bei zu starker Neigung des Fräswerkzeugs 14 kann eine Kollision mit der anderen Rotorschaufel 11 auftreten, die der Rotorschaufel 12 gegenüberliegt, die vom Fräswerkzeug 14 bearbeitet wird. Fig. 2 visualisiert hingegen eine Kollision des Fräswerkzeugs 14 mit der Rotorschaufel 11, die aktuell vom Fräswerkzeug 14 bearbeitet wird. Beide Kollisionsarten werden vom erfindungsgemäßen Fräsverfahren abgedeckt.

Die zu definierenden Kollisionskonturen, die vom Fräswerkzeug 14 nicht verletzt werden dürfen, entsprechen den Oberflächen bzw. Kanten der herauszufräsenden Rotorschaufeln 11 und 12. Diese können dadurch definiert werden, dass das Fräswerkzeug mit seiner Spitze entlang der Kanten der herauszufräsenden Rotorschaufeln verfahren wird und alle Bewegungen, die entlang dieser Kanten durchgeführt werden, als Kollisionskonturen definiert werden. Die Kollisionskonturen beziehen sich also immer auf das zu fertigende Bauteil und definieren einen Bereich, den das Fräswerkzeug 14 weder mit seinem Schaft noch mit seinem Radius verletzen darf.

In dem Fall, in dem das Fräswerkzeug 14 die Kollisionskontur verletzt, die der aktuell zu fräsenden Seitenwand entspricht (siehe Fig. 2), wird die Lage bzw. Ausrichtung des Fräswerkzeugs 14 derart verändert, dass die Verletzung dieser Kollisionskontur beseitigt wird. Hierzu wird der Anstellwinkel des Werkzeugvektors soweit vergrößert, dass eine kollisionsfreie Bewegung des Fräswerkzeugs 14 möglich wird.

In dem Fall, in dem das Fräswerkzeug 14 die Kollisionskontur verletzt, die der Seitenwand entspricht, welche der aktuell zu fräsenden Seitenwand gegenüberliegt (siehe Fig. 1), wird erfindungsgemäß eine Fehlermeldung bzw. ein Fehlerprotokoll erzeugt. In diesem Fall wird der Anstellwinkel des Fräsers nicht verändert.

Wird beim obigen Verfahren festgestellt, dass der Fräser bzw. das Fräswerkzeug 14 nicht kollisionsfrei durch den Strömungskanal 13, der durch die Kollisionskonturen begrenzt wird, bewegt werden kann, so kann der Fräserradius bzw. Fräserdurchmesser des Fräswerkzeugs 14 angepasst werden. Der Fräserdurchmesser muss dann soweit verringert werden, dass eine kollisionsfreie Fertigung des Bauteils möglich ist. Alternativ ist es auch möglich die Vorlaufwinkel anzupassen, so dass mit veränderten Vorlaufwinkeln eine kollisionsfreie Fertigung des Bauteils möglich ist.

Mithilfe der hier vorliegenden Erfindung wird ein Fräsverfahren vorgeschlagen, bei welchem die Werkzeugbahnen bzw. die Werkzeugvektoren durch Vorgabe von Vorlaufwinkel und Anstellwinkel definiert werden, und wobei gleichzeitig eine Kollision des Fräsers mit den Oberflächen des zu fertigenden Bauteils sicher vermieden werden kann. Hierdurch wird die Fräsbearbeitung von Bauteilen insgesamt verbessert. Das erfindungsgemäße Verfahren lässt sich besonders vorteilhaft beim 5-Achsfräsen einsetzen.

Das erfindungsgemäße Fräsverfahren kann insbesondere zur Fertigung von integral beschaufelten Rotoren für Gasturbinen, sogenannten Blades Disks (Blisks) oder Bladed Rings (Blings), eingesetzt werden.

## Patentansprüche

1. Fräsverfahren zur Fertigung von Bauteilen (10) aus schwer zerspanbaren Werkstoffen unter Erzeugung von Vertiefungen (13) mit mindestens einer Seitenwand (11, 12), insbesondere zur Fertigung von integral beschaufelten Rotoren für Gasturbinen, wobei die Vertiefungen (13) insbesondere Strömungskanäle und die Seitenwände (11, 12) insbesondere Schaufeloberflächen bilden, wobei ein Fräswerkzeug (14) zum Fräsen entlang mindestens einer definierten Werkzeugbahn bzw. Fräsbahn bewegt wird, **dadurch gekennzeichnet, dass** zusätzlich zu der oder jeder Werkzeugbahn mindestens eine, den Oberflächen oder Kanten der mindestens einen Seitenwand (11, 12) entsprechenden, Kollisionskontur definiert und die Lage bzw. Ausrichtung des Fräswerkzeugs (14) relativ zu der oder jeder Kollisionskontur überwacht wird, wobei die Lage bzw. Ausrichtung des Fräswerkzeugs (14) verändert wird und/oder eine Fehlermeldung generiert wird, wenn zumindest eine der Kollisionskonturen vom Fräswerkzeug verletzt wird, und wobei sich die oder jede Kollisionskontur auf das zu fertigende Bauteil (10) bezieht.

2. Verfahren nach Anspruch 1, **dadurch gekennzeichnet, dass** die Lage bzw. Ausrichtung des Fräswerkzeugs (14) entlang der oder jeder Werkzeugbahn relativ zum zu fräsenden Bauteil (10) durch Werkzeugvektoren bestimmt werden, wobei die Werkzeugvektoren mit Vorlaufwinkeln und Anstellwinkeln definiert werden.

3. Verfahren nach Anspruch 1 oder 2, **dadurch gekennzeichnet, dass** zum Fräsen von Vertiefungen (13), die durch zwei Seitenwände (11, 12) begrenzt werden, zwei Kollisionskonturen definiert werden, wobei eine erste Kollisionskontur einer ersten Seitenwand (11) und eine zweite Kollisionskontur einer zweiten Seitenwand (12) entspricht.

4. Verfahren nach Anspruch 3, **dadurch gekennzeichnet, dass** dann, wenn das Fräswerkzeug (14) die Kollisionskontur verletzt, die auf der aktuell zu fräsenden Seitenwand (11, 12) entspricht, die Lage bzw. Ausrichtung des Fräswerkzeugs (14) derart verändert wird, dass die Verletzung der Kollisionskontur beseitigt wird.

5. Verfahren nach Anspruch 4, **dadurch gekennzeichnet, dass** hierzu der Anstellwinkel des Werkzeugvektors vergrößert wird.

6. Verfahren nach einem oder mehreren der Ansprüche 3 bis 5, **dadurch gekennzeichnet, dass** dann, wenn das Fräswerkzeug (14) die Kollisionskontur verletzt, die der Seitenwand (11) entspricht, welche der aktuell zu fräsenden Seitenwand (12) gegenüberliegt, ein Fehlerprotokoll und/oder eine Fehlermeldung erzeugt wird.

7. Verfahren nach Anspruch 6, **dadurch gekennzeichnet, dass** das Fehlerprotokoll zur Dimensionierung des Fräswerkzeugs (14), insbesondere zur Bestimmung des Fräserdurchmessers, verwendet wird.

## Claims

1. Milling method for the production of components (10) from materials that are difficult to machine, generating depressions (13) with at least one side wall (11, 12), in particular for the production of rotors with integral blading for gas turbines, the depressions (13) forming in particular flow channels and the side walls (11, 12) forming in particular blade surfaces, wherein a milling tool (14) is moved for milling along at least one defined tool path or milling path, **characterised in that** in addition to the or each tool path at least one collision contour that corresponds to the surfaces or edges of the at least one side wall (11, 12) is defined and the position or alignment of the milling tool (14) in relation to the or each collision contour is monitored, with the position or alignment of the milling tool (14) being changed and/or an error message being generated when at least one of the collision contours is violated by the milling tool and with the or each collision contour relating to the component (10) that is to be produced.

2. Method according to claim 1, **characterised in that** the position and alignment of the milling tool (14) along the or each tool path in relation to the component (10) that is to be milled are determined by tool vectors, with the tool vectors being defined with approach angles and setting angles.

3. Method according to claim 1 or 2, **characterised in that** for the purpose of milling depressions (13) that are delimited by two side walls (11, 12), two collision contours are defined, with a first collision contour corresponding to a first side wall (11) and a second collision contour corresponding to a second side-wall contour (12).

4. Method according to claim 3, **characterised in that** when the milling tool (14) violates the collision contour corresponding to the side wall (11, 12) currently to be milled, the position or alignment of the milling tool (14) is changed in such a way that the violation of the collision contour is eliminated.

5. Method according to claim 4, **characterised in that** the setting angle of the tool vector is enlarged for this.

6. Method according to one or more of claims 3 to 5, **characterised in that** when the milling tool (14) violates the collision contour corresponding to the side wall (11) lying opposite the side wall (12) currently to be milled, an error log and/or an error message are/is generated.

7. Method according to claim 6, **characterised in that** the error log is used to dimension the milling tool (14), in particular to determine the mill diameter.

## Revendications

1. Procédé de fraisage pour la fabrication de pièces (10) dans des matériaux de coupe difficile par production d'évidements (13) ayant au moins une paroi latérale (11, 12), en particulier pour la fabrication de rotors à aubage intégral pour des turbines à gaz, les évidements (13) formant en particulier des canaux d'écoulement et les parois latérales (11, 12) formant en particulier des surfaces de pales, un outil de fraisage (14) étant déplacé pour le fraisage le long d'au moins une course d'outil ou de fraisage définie, **caractérisé en ce qu'**en complément de la ou de chaque course d'outil au moins un contour de collision est défini, correspondant aux surfaces ou aux bords d'au moins une paroi latérale (11, 12), et **en ce que** la position ou l'orientation de l'outil de fraisage (14) par rapport au ou à chaque contour de collision est surveillée, la position ou l'orientation de l'outil de fraisage (14) étant modifiée et/ou un message d'erreur généré si au moins un des contours de collision est abîmé par l'outil de fraisage, et le ou chaque contour de collision se rapportant à la pièce (10) à fabriquer.

2. Procédé selon la revendication 1, **caractérisé en ce que** la position ou l'orientation de l'outil de fraisage (14) est déterminée par des vecteurs d'outil le long de la ou de chaque course d'outil par rapport à la pièce (10) à fraiser, les vecteurs d'outil étant définis avec des angles d'avance et des angles d'attaque.

3. Procédé selon la revendication 1 ou 2, **caractérisé en ce que**, pour le fraisage d'évidements (13) délimités par deux parois latérales (11, 12), deux contours de collision sont définis, un premier contour correspond à une première paroi latérale (11) et un deuxième contour de collision à deuxième paroi latérale (12).

4. Procédé selon la revendication 3, **caractérisé en ce que**, si l'outil de fraisage (14) abîme le contour de collision correspondant à la paroi latérale (11, 12) à fraiser actuelle, la position ou l'orientation de l'outil de fraisage (14) est modifiée de manière à supprimer l'endommagement du contour de collision.

5. Procédé selon la revendication 4, **caractérisé en ce que** l'angle d'attaque du vecteur d'outil est agrandi à cet effet.

6. Procédé selon l'une ou plusieurs des revendications 3 à 5, **caractérisé en ce que**, si l'outil de fraisage (14) abîme le contour de collision correspondant à la paroi latérale (11) opposée à la paroi latérale (12) à fraiser actuelle, un protocole d'erreur et/ou un message d'erreur sont générés.

7. Procédé selon la revendication 6, **caractérisé en ce que** le protocole d'erreur est utilisé pour dimensionner l'outil de fraisage (14), en particulier pour déterminer le diamètre de fraise.
